## Europäisches Patentamt

## European Patent Office

## Office européen des brevets

(11) Veröffentlichungsnummer: **0 083 404**
**A1**

## EUROPÄISCHE PATENTANMELDUNG

(21) Anmeldenummer: 82110081.5

(22) Anmeldetag: 02.11.82

(51) Int. Cl.³: **A 01 B 33/12**

(30) Priorität: 31.12.81 DE 8138215 U

(43) Veröffentlichungstag der Anmeldung: 13.07.83
Patentblatt 83/28

(84) Benannte Vertragsstaaten: **AT CH DE FR GB IT LI NL**

(71) Anmelder: **Rabewerk Heinrich Clausing, D-4515 Bad Essen 1 (DE)**

(72) Erfinder: **Warnking, Richard, Klockenpatt 5, D-4515 Bad Essen 1 (DE)**

(74) Vertreter: **Patentanwälte Dipl.-Ing. R. Schlee Dipl.-Ing. A. Missling, Bismarckstrasse 43, D-6300 Giessen (DE)**

(54) **Bodenbearbeitungsgerät mit rotierenden Werkzeugen.**

㉗ Das Bodenbearbeitungsgerät ist an seinen beiden seitlichen Enden mit Schilden (8) ausgerüstet. Jeder Schild (8) ist um ein Gelenk (11) nach außen schwenkbar, das eine horizontale Achse (21) aufweist, die in Fahrtrichtung verläuft. Die Normallage jedes Schildes (8) wird durch eine Feder (25) aufrechterhalten, die eine gewisse Vorspannung hat und bei Auslenkung des Schildes (8) noch weiter gespannt wird.

Außer dem genannten Gelenk (11) ist ein zweites Gelenk (12) vorgesehen, dessen Achse horizontal und quer zur Fahrtrichtung verläuft und um das der Schild (8) beim Auftreffen auf Hindernisse zurückgeschwenkt werden kann.

Durch die besondere Anordnung des erstgenannten Gelenkes (11) wird erreicht, daß der Schild bei seitlichem Ausschwenken eine zur Fahrtrichtung parallele Lage beibehält.

EP 0 083 404 A1

Patentanwälte

Dipl.-Ing. Richard Schlee
Dipl.-Ing. Arne Missling

6300 Lahn-Giessen 1
Bismarckstrasse 43
Telefon: (0641) 71019

00.83404

S/B 14.590

R a b e w e r k  Heinrich Clausing,
4515 Bad Essen 8 - Linne

Bodenbearbeitungsgerät mit rotierenden
Werkzeugen

Die Erfindung bezieht sich auf ein Bodenbearbeitungsgerät mit an einem Gestell gelagerten rotierenden Werkzeugen, insbesondere auf eine Kreiselegge mit mehreren in einer sich quer zur Fahrtrichtung erstreckenden Reihe nebeneinander angeordneten Werkzeugkreiseln mit senkrechten Wellen, wobei an den seitlichen Enden des Gestells Schilde angeordnet sind, die sich parallel zur Fahrtrichtung erstrecken, wobei jeder Schild mittels zwei Gelenken am Gestell aufgehängt ist, nämlich einem ersten Gelenk, um das der Schild seitlich vom Gestell wegschwenkbar ist und einem mit dem ersten Gelenk verbundenen zweiten Gelenk, um das der Schild nach oben schwenkbar ist und das im vorderen Bereich des Schildes angeordnet ist, wobei die Gelenkachse quer zur Fahrtrichtung verläuft.

Bodenbearbeitungsgeräte mit rotierenden Werkzeugen können feste Teile, insbesondere Steine, seitlich wegschleudern. Um die daraus resultierenden Gefahren zu vermeiden, baut man an die Geräte Schutzschilde an, an denen weggeschleuderte Gegenstände anprallen und dadurch im Bereich des Gerätes zurückgehalten werden. Um zu verhindern, daß durch die Schilde beim Auftreffen derselben auf ein Hindernis, z.B. einen großen Stein, das gesamte Gerät angehoben werden muß, werden die Schilde oft so aufgehängt, daß sie nach oben ausweichen können. Da es auch

- 2 -

vorkommen kann, daß sich zwischen Schild und rotierenden Arbeitswerkzeugen Steine oder dergleichen einklemmen, hat man Schilde auch schon so aufgehängt, daß sie entgegen einer Rückstellkraft nach der Seite ausweichen können. Schilde haben die zusätzliche Aufgabe, das seitliche Herausschleudern von Erde zu verhindern.

Bei einem bekannten Gerät der eingangs genannten Art (DE-OS 27 51 160) steht die Achse des ersten Gelenkes vertikal und ist im vorderen Bereich des Schildes angeordnet. Bei seitlichem Ausweichen des Schildes muß sich dieser relativ zur Fahrtrichtung schrägstellen. In dieser Lage hat der Schild die Wirkung eines Schneepfluges, d.h. er hat die Tendenz, Erde seitlich zu verlagern. Dies ist unerwünscht, weil auf der bearbeiteten Fläche Anhäufungen entstehen.

Der Erfindung liegt die Aufgabe zugrunde, ein Bodenbearbeitungsgerät der eingangs genannten Art so auszubilden, daß bei seitlichem Ausschwenken der Schilde diese keine Schrägstellung relativ zur Fahrtrichtung einnehmen.

Diese Aufgabe wird nach der Erfindung dadurch gelöst, daß die Achse des ersten Gelenkes horizontal und parallel zur Fahrtrichtung verläuft.

Bei einem so ausgebildeten Gerät schwenkt der Schild, wenn ihn ein Hindernis dazu zwingt, in der Weise aus, daß sich die Schildunterkante unter Beibehaltung ihrer zur Fahrtrichtung parallelen Lage vom Gestell entfernt und dabei auch etwas angehoben wird, nämlich längs eines Zylindermantels, dessen Achse mit der Achse des ersten Gelenkes zusammenfällt. Die Aufhängung des Schildes ist stabil und verschleißarm, da nur zwei Gelenkachsen vorhanden sind. Die Abnutzung der Teile der Schildaufhängung ist deshalb auch bei langer Gebrauchsdauer des Gerätes nur gering.

Jeder Schild ist vorzugsweise relativ zum ersten Gelenk höhenverstellbar (Anspruch 2). Konstruktiv einfach läßt sich eine Höhenverstellung mit den im Anspruch 3 angegebenen Mitteln erzielen. Durch die Höhenverstellbarkeit läßt sich bei jeder Arbeitstiefe des Gerätes eine optimale Stellung der Schilde auswählen.

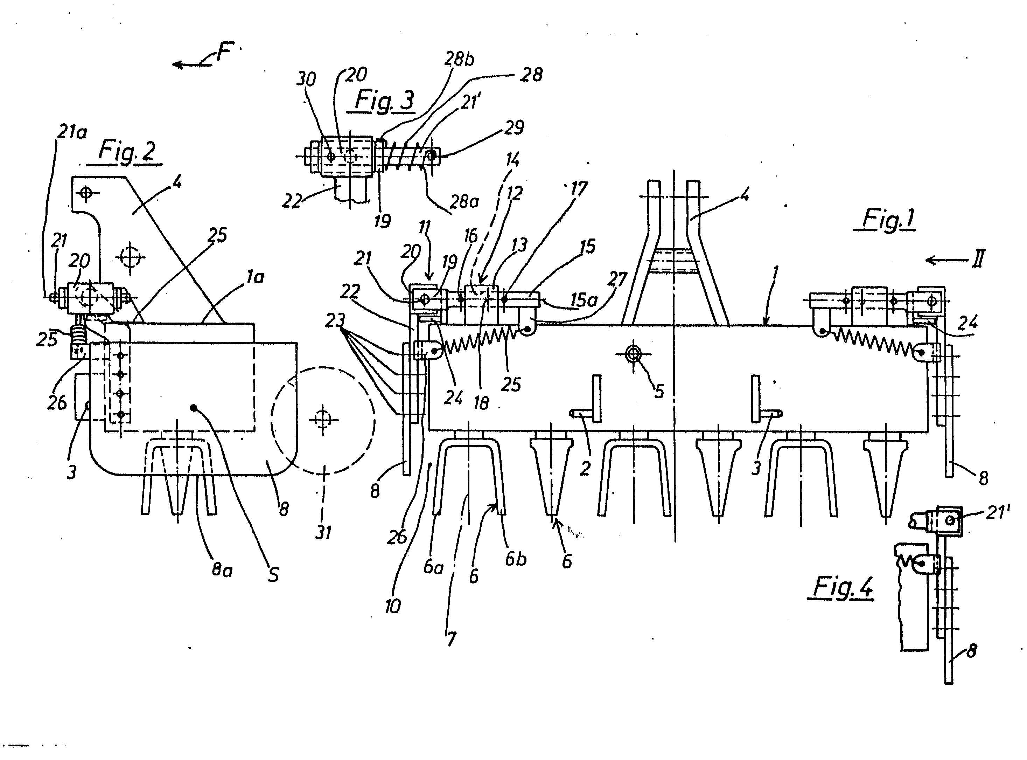

Das zweite Gelenk hat bei einer vorteilhaften Ausführungsform die in den Fig. 4 und 5 angegebene Beschaffenheit. Mittels eines verschiebbaren Gelenkbolzens nach Anspruch 5 lassen sich die Schilde auf einfache Weise in eine Transportstellung verschieben. Dies kann notwendig werden bei Geräten, deren Breite größer ist als die auf öffentlichen Straßen zugelassene Höchstbreite.

Eine einfache Verbindung zwischen den beiden Gelenken erhält man dadurch, daß an dem eventuell verschiebbaren Gelenkbolzen des zweiten Gelenkes eine Gabel angeordnet wird (Anspruch 6). Mit einer Anordnung der Achse des zweiten Gelenkes gemäß Anspruch 7 erhält man relativ große Abstände zwischen der Unterkante des Schildes und den Gelenken, was für die Bewegungswege des Schildes vorteilhaft ist. Die Anordnung des Gelenkes möglichst weit vorne bringt den Vorteil, daß schon bei relativ kleinem Schwenkwinkel des Schildes dieser relativ weit angehoben wird.

Vorteilhafterweise sind elastische Rückstellelemente gemäß den Ansprüchen 8 bis 11 vorgesehen. Damit können relativ große und dennoch nachgiebige Kräfte ausgeübt werden, die die Schilde in ihrer Sollage halten. Es kann jedoch auch genügen, hierfür Gewichtskräfte auszunutzen. Insbesondere für die Schwenkung um das zweite Gelenk ist das von der Gewichtskraft herrührende Rückstellmoment verhältnismäßig groß. Man kann aber bei einer Anordnung gemäß Anspruch 10 mit einer einzigen Feder Momente um beide Gelenke erzeugen. Eine besonders raumsparende Anordnung erhält man mit einer Schenkelfeder gemäß Anspruch 11.

Ein Anschlag gemäß Anspruch 12 für die Fixierung der Horizontallage der Schilde hat den Vorteil, daß diese beim Anheben des Gerätes nicht nach unten auspendeln.

Die Anordnung des ersten Gelenkes gemäß Anspruch 13 hat den Vorteil, daß die Anhebebewegung des Schildes beim seitlichen Ausschwenken nur gering ist. Dies ist beispielsweise dann erwünscht, wenn der Schild Bodenkontakt hat und sich möglichst nicht vom Boden abheben soll.

In der Zeichnung ist ein Ausführungsbeispiel der Erfindung dargestellt. Es zeigen:

Fig. 1   eine Vorderansicht einer Kreiselegge,

Fig. 2   eine Seitenansicht entsprechend dem Pfeil II in Fig. 1,

Fig. 3   ein Detail einer Schildaufhängung und

Fig. 4   eine Schildaufhängung, bei der ein horizontales Gelenk im Vergleich mit den Ausführungsformen nach den Fig. 1 bis 3 weiter nach außen verlegt ist.

Die in der Zeichnung dargestellte Kreiselegge hat ein Gestell 1, das zugleich als Getriebekasten ausgebildet ist. Am Gestell 1 befinden sich Zapfen 2, 3 und ein Turm 4 für die Verbindung des Gerätes mit einem Schlepper-Dreipunktgestänge. An der Vorderseite des Getriebekastens befindet sich auch ein Zapfwellenanschluß 5, über den die Maschine angetrieben wird.

Die Kreiselegge hat mehrere drehbare Werkzeugkreisel 6, die in einer quer zur Fahrtrichtung des Gerätes (in Fig. 2 angedeutet durch den Pfeil F) verlaufenden Reihe angeordnet sind. Die Werkzeugkreisel haben Zinken 6a, 6b und sind um vertikale Achsen 7 drehbar. Um seitliches Herausschleudern von Erde, die von den Kreiseln 6 aufgeworfen wird, zu verhindern, sind seitlich des Gerätes Schilde 8 angeordnet. Die Schilde müssen, um Beschädigungen zu vermeiden, ausweichen können, z.B. dann, wenn in den Zwischenraum 10 zwischen Schild 8 und benachbartem Kreisel 6 ein großer Stein eingedrungen ist oder wenn die Unterkante 8a über einen Stein hinweggleiten muß. Um das Ausweichen zu ermöglichen, ist der Schild in der nachfolgend beschriebenen Art und Weise aufgehängt.

Die Schildaufhängung hat ein insgesamt mit 11 bezeichnetes erstes Gelenk und ein insgesamt mit 12 bezeichnetes zweites Gelenk. Das zweite Gelenk 12 hat einen Lagerbock 13, in dem sich eine Lagerbohrung 14 befindet. Die Lagerbohrung 14 ist von einem horizontalen Bolzen 15 durchgriffen, dessen geometrische Achse mit 15a bezeichnet ist. Der Bolzen 15 kann in der Lagerbohrung 14 verschoben werden. In der gezeichneten Arbeitsstellung ist die Verschiebelage des Bolzens 15 durch zwei Querstifte 16 und 17 fixiert, die durch den Bolzen 15 hindurchgesteckt und beiderseits des Lagerbockes 13 angeordnet sind. Im Bolzen 15 befindet sich eine weitere Durchgangsbohrung 18, mit deren Hilfe eine weitere Verschiebelage des Bolzens 15 dadurch fixiert werden kann, daß nach Verschiebung des Bolzens 15 in eine solche Lage, daß das Loch 18 außerhalb der Lagerbohrung 14 liegt, durch das Loch 18 der vorher im Loch 16 befindliche Arretierungsstift hindurchgesteckt wird.

Am äußeren Ende des horizontalen Bolzens 15 ist eine Gabel 19 befestigt, die Bestandteil des ersten Gelenkes 11 ist. In dem Gabelzwischenraum ist ein Klotz 20 mittels eines Bolzens 21 drehbar gelagert, dessen geometrische Achse mit 21a bezeichnet ist. Mit dem Klotz 20 ist ein vertikaler Träger 22 fest verbunden, an dem der Schild 8 höhenverstellbar befestigt ist. Die Höhenverstellung ist dadurch möglich, daß sowohl im Träger 22 als auch im Schild 8 eine vertikale Reihe aus Löchern angeordnet ist. Die Lage dieser Löcher ist durch strichpunktierte Linien 23 symbolisiert. Die Lochabstände im Schild 8 und im Träger 22 sind gleich, so daß die Löcher zur Deckung gebracht werden können. Je nachdem, welche Löcher zur Deckung gebracht werden, ist die Höhenlage zwischen Träger 22 und Schild 8 verschieden. Der Schild 8 wird mittels mindestens zwei Durchgangsschrauben mit dem Träger 22 verbunden. Anstelle gleicher Lochteilungen kann auch eine Differentialteilung vorhanden sein, was eine besonders feinstufige Verstellung ermöglicht.

An der Gabel ist ein Anschlag 24 angeordnet, an dem der Träger in der normalen Arbeitsstellung des Schildes 8 anliegt. Die Anlage wird durch die Kraft einer Feder 25 aufrechterhalten. An der Gabel befindet sich noch ein weiterer Anschlag 25, der auf der Oberseite 1a des Getriebekastens zur Anlage kommt, wenn der Schild 8 seine Normallage einnimmt. Diese Anlage wird durch die am Schwerpunkt S angreifende Gewichtskraft aufrechterhalten, die vom Eigengewicht des Schildes 8 herrührt. Diese Gewichtskraft erzeugt ein Drehmoment um das zweite Gelenk 12, das den Schild in Fig. 2 in Uhrzeigerrichtung zu drehen versucht.

Am Träger 22 ist ein Lappen 26 befestigt, an dem die Zugfeder 25 eingehängt ist. Das andere Ende der Zugfeder 25 greift an einem Lappen 27 an, der mit dem horizontalen Bolzen 15 verschweißt ist. Bei der gezeichneten Anordnung der Feder übt diese um das erste Gelenk 11 ein Drehmoment aus, durch das der Träger 22 gegen den Anschlag 24 gezogen wird.

Alternativ zur Zugfeder 25 kann gemäß Fig. 3 eine Schenkelfeder 28 vorgesehen sein. Die Schenkelfeder 28 umgibt einen Gelenkbolzen 21', der dem Gelenkbolzen 21 nach Fig. 1 und 2 entspricht. Der eine Schenkel 28a der Feder 28 greift an einem Stift 29 an, der durch den Gelenkbolzen 21' hindurchgesteckt ist. Der andere Schenkel 28b ist an der Gabel 19 eingehängt. Die Schenkelfeder kann ebenfalls ein Drehmoment auf den Träger 22 ausüben. Zu diesem Zweck ist der Klotz 20 mittels eines Querstiftes 30 drehfest mit dem Bolzen 21' verbunden.

Das Gerät arbeitet wie folgt. Bei normaler Ackerarbeit befinden sich die Schilde 8 in der gezeichneten Arbeitsstellung. Wenn wegen eines Hindernisses im Zwischenraum 10 ein Schild ausschwenken muß, findet eine Schwenkung um das erste Gelenk 11 statt, wobei die Feder 25 gespannt wird. Wenn das Hindernis den Zwischenraum 10 passiert hat, wird der Schild durch die

- 7 -

Feder 25 wieder in die Arbeitsstellung gezogen, die erreicht ist, wenn der Träger 22 am Anschlag 24 anliegt. Wenn der Schild 8 auf ein Hindernis aufläuft, das vor dem Gerät liegt, findet eine Anhebung des Schildes durch Schwenkung um das zweite Gelenk 12 statt. Nach Passieren des Hindernisses sorgt das Gewichtsmoment dafür, daß der Schild wieder in seine Normallage gelangt, die erreicht ist, wenn der Anschlag 25 auf der Oberseite 1a des Getriebekastens 1 aufliegt. Es können auch beide Schwenkbewegungen gleichzeitig stattfinden, d.h. der Schild kann sowohl nach der Seite um das Gelenk 11 wegschwenken, als auch gleichzeitig um das Gelenk 12 nach oben schwenken.

Die Arbeitstiefe des Gerätes wird durch eine als Walze ausgebildete Bodenstütze 21 aufrechterhalten. Diese Walze 31 ist in nicht dargestellter Art und Weise relativ zum Gestell 1 höhenverstellbar. Bei Veränderung der Höheneinstellung kann eine Justierung der Schilde 8 erforderlich sein, was durch Auswahl geeigneter Löcher 23 für das Durchstecken von Befestigungsbolzen bewerkstelligt wird.

Wenn das Gerät auf öffentlichen Verkehrswegen transportiert werden soll, wird seine Breite dadurch verringert, daß die Schilde gegen die Endseiten des Gestells 1 angelegt werden. Zu diesem Zweck wird der Querstift 16 herausgezogen und der horizontale Bolzen 15 in der Lagerbohrung nach innen verschoben. Hierbei findet eine Spannung der Feder 25 nicht statt, da ja diese am Lagerbolzen selber verankert ist. Der Stift 16 kann zur Fixierung der Transportstellung benutzt werden, indem er durch die Querbohrung 18 hindurchgesteckt wird, nachdem der Bolzen 15 so weit verschoben ist, daß die Querbohrung 18 außerhalb der Lagerbohrung 14 liegt.

Anstelle der gezeichneten Anordnung der Feder 25 könnte eine Zugfeder auch statt am Bolzen 15 am Gestell 1 eingehängt sein und derart liegen, daß sie auch ein Moment um das zweite

- 8 -

Gelenk 12 ausübt. Eine solche Anordnung wird man wählen, wenn das Rückstellmoment aufgrund der Gewichtskraft nicht ausreichend ist.

Bei der Ausführungsform nach Fig. 4 ist der hier mit 21' bezeichnete horizontale Gelenkbolzen gegenüber der Ausführungsform nach den Fig. 1 bis 3 weiter nach außen verlegt. Er liegt senkrecht oberhalb des Schildes 8. Diese Anordnung ergibt einen etwas anderen Schwenkweg des Seitenschildes, nämlich einen Schwenkweg derart, daß sich der Bodenabstand des Schildes beim seitlichen Ausschwenken weniger stark ändert als bei den anderen Ausführungsformen.

- 1 -

Ansprüche:

1. Bodenbearbeitungsgerät mit an einem Gestell gelagerten rotierenden Werkzeugen, insbesondere Kreiselegge mit mehreren in einer sich quer zur Fahrtrichtung erstreckenden Reihe nebeneinander angeordneten Werkzeugkreiseln mit senkrechten Wellen, wobei an den seitlichen Enden des Gestells Schilde angeordnet sind, die sich parallel zur Fahrtrichtung erstrecken, wobei jeder Schild mittels zwei Gelenken am Gestell aufgehängt ist, nämlich einem ersten Gelenk, um das der Schild seitlich vom Gestell wegschwenkbar ist und einem mit dem ersten Gelenk verbundenen zweiten Gelenk, um das der Schild nach oben schwenkbar ist und das im vorderen Bereich des Schildes angeordnet ist, wobei die Gelenkachse quer zur Fahrtrichtung verläuft, dadurch gekennzeichnet, daß die Achse (21a) des ersten Gelenkes (11) horizontal und parallel zur Fahrtrichtung verläuft.

2. Bodenbearbeitungsgerät nach Anspruch 1, dadurch gekennzeichnet, daß jeder Schild (8) relativ zum ersten Gelenk (11) höhenverstellbar ist.

3. Bodenbearbeitungsgerät nach Anspruch 2, dadurch gekennzeichnet, daß am ersten Gelenk (11) ein Tragteil (22) für den Schild (8) angeordnet ist, an dem der Schild (8) mittels Bolzen befestigt ist, die Schild (8) und Tragteil (22) durchgreifen, wobei im Tragteil (22) und/oder im Schild (8) vertikale Lochreihen angeordnet sind, von denen Löcher bei verschiedenen Höhenlagen des Schildes (8) aufeinander ausrichtbar sind.

4. Bodenbearbeitungsgerät nach einem der vorhergehenden Ansprüche, dadurch gekennzeichnet, daß das zweite Gelenk (12) einen horizontalen Bolzen (15) aufweist, der in einer am Gestell (1) angeordneten Lagerbohrung (14) drehbar ist.

5. Bodenbearbeitungsgerät nach Anspruch 4, dadurch gekennzeichnet, daß der horizontale Bolzen (15) in der Lagerbohrung (14) auch längsverschiebbar ist, nämlich von einer Ruhestellung in eine Arbeitsstellung, in der der Schild einen größeren Abstand vom seitlichen Ende des Gestells (1) hat als in der Arbeitsstellung, wobei die Arbeitsstellung und die Ruhestellung arretierbar sind, die Arbeitsstellung beispielsweise durch zwei seitlich der Lagerbohrung (14) angeordnete und den Bolzen (15) durchgreifende Querstifte (16, 17) und die Ruhestellung beispielsweise durch einen Querstift, der den Bolzen (15) an anderer Stelle durchgreift und ebenfalls seitlich der Lagerbohrung (14) angeordnet ist.

6. Bodenbearbeitungsgerät nach einem der Ansprüche 4 und 5, dadurch gekennzeichnet, daß am äußeren Ende eines jeden horizontalen Bolzens (15) als Bestandteil des ersten Gelenkes (11) eine Gabel (19) angeordnet ist, in der ein Kopf (20) drehbar ist, an dem der Schild (8) unmittelbar oder mittelbar, z.B. über ein Tragteil (22) nach Anspruch 3, befestigt ist.

7. Bodenbearbeitungsgerät nach einem der vorhergehenden Ansprüche, dadurch gekennzeichnet, daß die Achse (15a) des zweiten Gelenkes (12) oberhalb des Gestells (1) verläuft, vorzugsweise in der Nähe des vorderen Endes des Gestells (1) oder vor dem vorderen Ende des Gestells (1).

8. Bodenbearbeitungsgerät nach einem der vorhergehenden Ansprüche, gekennzeichnet durch ein elastisches Rückstellelement (25), das einerseits am Schild (8) oder damit verbundenen Teilen (22) und andererseits am zweiten Gelenk (12) oder am Gestell (1) angreift und auf das erste Gelenk (11) ein Drehmoment ausübt, das den Schild (8) in Richtung des Gestells zu bewegen versucht, wobei ein Anschlag (24) vorgesehen ist, der bei senkrechter Lage des Schildes (8) zur Wirkung kommt.

9. Bodenbearbeitungsgerät nach Anspruch 8, dadurch gekennzeichnet, daß das elastische Rückstellelement eine Zugfeder (25) ist, die einerseits am Schild oder am Schildträger (22) und andererseits am horizontalen Bolzen (15) nach Anspruch 4 angreift.

10. Bodenbearbeitungsgerät nach Anspruch 8, dadurch gekennzeichnet, daß das elastische Rückstellelement eine Zugfeder (25) ist, die einerseits am Schild (8) oder am Schildträger (22) und andererseits am Gestell (1) angreift und deren Wirkungslinie so verläuft, daß auch ein Drehmoment um das zweite Gelenk (12) ausgeübt wird, das den Schild (8) unten zu halten versucht.

11. Bodenbearbeitungsgerät nach Anspruch 8, dadurch gekennzeichnet, daß ein die Gabel (19) nach Anspruch 6 durchgreifender und fest mit dem in die Gabel eingreifenden Kopf (20) verbundener Gelenkbolzen (21') von einer Schenkelfeder (28) umgeben ist, deren einer Schenkel (28a) am Bolzen (21') und deren anderer Schenkel (28b) an der Gabel (19) verankert ist.

12. Bodenbearbeitungsgerät nach einem der vorhergehenden Ansprüche, gekennzeichnet durch einen Anschlag für die Begrenzung der Schwenkung um das zweite Gelenk, z.B. eine Anschlagplatte (25), die mit dem horizontalen Bolzen (15) nach Anspruch 4 mittelbar oder unmittelbar verbunden ist und in der Normalstellung auf der Oberseite (1a) des Gestells (1) aufliegt.

*Fig. 3*

*Fig. 2*

*Fig. 1*

*Fig. 4*

00834O4

0083404

Europäisches
Patentamt

**EUROPÄISCHER RECHERCHENBERICHT**

Nummer der Anmeldung

EP 82 11 0081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 402 391 (VAN DER LELY) <br><br> * Insgesamt * | 1,4,7,8 | A 01 B 33/12 |
| X | DE-A-2 833 399 (AMAZONEN-WERKE H. DREYER) <br> * Insgesamt * | 1,8,9 | |
| A | FR-A-2 388 473 (VAN DER LELY) | | |
| A | DE-A-2 945 062 (B. KRONE) <br> * Seite 2, Anspruch 7; Figuren 1-3 * | 2 | |

RECHERCHIERTE
SACHGEBIETE (Int. Cl. ³)

A 01 B

Der vorliegende Recherchenbericht wurde für alle Patentansprüche erstellt.

| Recherchenort <br> DEN HAAG | Abschlußdatum der Recherche <br> 25-03-1983 | Prüfer <br> VERDOODT S.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82